# EUROPEAN PATENT APPLICATION

(11) **EP 2 631 816 A1**
(43) Date of publication of application: **28.08.2013**
(21) Application number: 11834059.5
(22) Date of filing: 20.10.2011
(51) Int. Cl.: G06F 17/30, G06F 3/048

(54) **NON-TEMPORARY COMPUTER-READABLE MEDIUM IN WHICH DATA PROCESSING TERMINAL, DATA SEARCH METHOD AND CONTROL PROGRAM ARE STORED**

(30) Priority: 20.10.2010 JP 2010235284
(71) Applicant: NEC CASIO Mobile Communications, Ltd., Kawasaki Kanagawa 211-8566 (JP)
(72) Inventor: IWAKI, Yoshihiro, Kawasaki-shi Kanagawa 211-8666 (JP)
(74) Representative: Vossius & Partner
(86) International application number: PCT/JP2011/005876
(87) International publication number: WO 2012/053213

(57) **Abstract**

To facilitate an operation to display desired data among a set of similar data using a touch panel, a data processing terminal displays first group information being part of a plurality of group information and first data relevant to the first group information in association with each other as selectable areas on an input/output means, upon accepting a selection of the first group information from the user, displays, on the input/output means, a group selection area for selecting any of the plurality of group information including second group information not being displayed on the input/output means, upon accepting a selection of the second group information from the user through the group selection area, acquires second data relevant to the selected second group information from the storage means, and displays the second group information and the second data in association with each other as the selectable areas on the input/output means.

## Description

### Technical Field

The present invention relates to a data processing terminal, a data search method, and a non-transitory computer readable medium storing a control program and, particularly, to a data processing terminal, a data search method, and a non-transitory computer readable medium storing a control program for searching a large number of data lists for desired data.

### Background Art

The storage capacity of a data processing terminal such as a mobile phone is on the increase. Accordingly, the number of records of data that can be stored in the data processing terminal is increasing. On the other hand, there is a limitation to the screen size of the data processing terminal, and it is difficult to display the records of all stored data in a list. Further, it complicates the operation to perform keyword search or the like upon use of the data processing terminal, which is not practical. Thus, data search by efficient operation is essential to the data processing terminal.

Patent Literature 1 discloses a technique related to a mobile phone with a plurality of function keys, character input keys, joystick and the like. A mobile phone according to Patent Literature 1 displays a plurality of menus as a plurality of icons on a screen. The mobile phone then moves the focus on the icons in accordance with a user's operation of the joystick. Further, the mobile phone detects that the joystick is pushed and thereby displays a list of sub-menus of the menu on which the focus is present on the screen.

Further, Patent Literature 2 discloses a technique related to a portable information terminal device for promoting the efficiency of search for input data. The portable information terminal device according to Patent Literature 2 has a display mode switch button for switching between list view display mode and detail view display mode. Further, the portable information terminal device displays data in accordance with the display mode and an attribute of the data as a tab or marker in one screen.

Furthermore, Patent Literature 3 discloses a technique related to a mobile communication terminal device. The mobile communication terminal device according to Patent Literature 3, upon accepting a selection among a displayed list by a cursor key, displays the detailed content of a selected element.

### Citation List

### Patent Literature

PTL 1: Japanese Unexamined Patent Application Publication No. 2002-261918
PTL 2: Japanese Unexamined Patent Application Publication No. H9-297742
PTL 3: Japanese Unexamined Patent Application Publication No. H11-136340

### Summary of Invention

### Technical Problem

Touch panel type data processing terminals such as smartphones are becoming widespread today. In a touch panel type data processing terminal, a display device and an input device are integrated. Particularly, in a smartphone or the like, a keyboard as a physical input device is eliminated as much as possible. Instead, contact of a user's finger, pen or the like with a screen is detected, and processing is performed in accordance with the contact position or area, contact time or the like.

For example, a touch panel type data processing terminal displays a button shape in a specified area of a screen on a touch panel. Then, upon detection of contact of a user's finger or the like with the specified area, the touch panel type data processing terminal executes processing corresponding to the case where a physical button is pressed.

Data handled by a data processing terminal includes a data set containing many similar entries such as a telephone directory. The data processing terminal performs so-called list display where those data set entries are displayed in line in a specified sequence. Further, in use of the data processing terminal, an operation to display a data set containing many similar entries in a list on a screen and select desired data among those occurs frequently. However, when list display is made, in many cases not all data can be displayed due to the constraints of display size. In this case, it is necessary to scroll a screen and display data that is not being displayed.

In the above-described touch panel type data processing terminal, a hardware button for scroll is not provided in many cases. Thus, in a smartphone or the like, for example, an operation that swings a screen with a user's finger is often detected as a scroll operation. There is thus a problem that a user's operation to scroll a screen for displaying desired data is complicated. Particularly, when desired data is at the end of list display, time and trouble for the scroll operation is not negligible.

The reason is that, in a touch panel, an area to accept a selection needs to have a size that can be selectively touched by a user's finger or the like because input and output areas are combined. Accordingly, there are severe constraints on the number of buttons that can be displayed in one screen.

Note that in the techniques disclosed in Patent Literatures 1 to 3, the buttons are hardware. Thus, input and output areas are not combined. Accordingly, the constraints on a selection accept area are not severe, and as much information as possible can be displayed in one screen. Therefore, the techniques disclosed in Patent Literatures 1 to 3 cannot solve the problem of complexity in operation under the condition where a selection accept area needs a certain size, which is the problem in the touch panel.

The present invention has been accomplished to solve the above problems and an object of the present invention is thus to provide a data processing terminal, a data search method, and a non-transitory computer readable medium storing a control program to facilitate an operation to display desired data among a set of similar data using a touch panel.

### Solution to Problem

According to a first aspect of the present invention, a data processing terminal includes a storage means for storing a plurality of data and a plurality of group information being identification information of each group when the plurality of data are classified into a plurality of groups in relevance to each other; an input/output means for displaying the data and the group information by allocating areas selectable by a user; and a control means for controlling the storage means and the input/output means, wherein the control means displays first group information being part of the plurality of group information and first data relevant to the first group information in association with each other as the selectable areas on the input/output means, upon accepting a selection of the first group information from the user, the control means displays, on the input/output means, a group selection area for selecting any of the plurality of group information including second group information not being displayed on the input/output means, upon accepting a selection of the second group information from the user through the group selection area, the control means acquires second data relevant to the selected second group information from the storage means, and the control means displays the second group information and the second data in association with each other as the selectable areas on the input/output means.

According to a second aspect of the present invention, a data search method includes acquiring, from a storage unit that stores a plurality of data and a plurality of group information being identification information of each group when the plurality of data are classified into a plurality of groups in relevance to each other, first group information being part of the plurality of group information and first data relevant to the first group information; generating a first group information area where an area selectable by a user is allocated from the acquired first group information; generating a first data area where an area selectable by the user is allocated from the acquired first data; displaying the first group information area and the first data area in association with each other on an input/output unit that can accept a selection of an area from the user; upon accepting a selection of the first group information area from the user, displaying, on the input/output unit, a group selection area for selecting any of the plurality of group information including second group information not being displayed on the input/output unit; upon accepting a selection of the second group information from the user through the group selection area, acquiring the selected second group information and second data relevant to the selected second group information from the storage unit; generating a second group information area where an area selectable by the user is allocated from the acquired second group information; generating a second data area where an area selectable by the user is allocated from the acquired second data; and displaying the second group information area and the second data area in association with each other on the input/output unit.

According to a third aspect of the present invention, a non-transitory computer readable medium stores a control program causing a computer to execute a process including acquiring, from a storage unit that stores a plurality of data and a plurality of group information being identification information of each group when the plurality of data are classified into a plurality of groups in relevance to each other, first group information being part of the plurality of group information and first data relevant to the first group information; generating a first group information area where an area selectable by a user is allocated from the acquired first group information; generating a first data area where an area selectable by the user is allocated from the acquired first data; displaying the first group information area and the first data area in association with each other on an input/output unit that can accept a selection of an area from the user; upon accepting a selection of the first group information area from the user, displaying, on the input/output unit, a group selection area for selecting any of the plurality of group information including second group information not being displayed on the input/output unit; upon accepting a selection of the second group information from the user through the group selection area, acquiring the selected second group information and second data relevant to the selected second group information from the storage unit; generating a second group information area where an area selectable by the user is allocated from the acquired second group information; generating a second data area where an area selectable by the user is allocated from the acquired second data; and displaying the second group information area and the second data area in association with each other on the input/output unit.

### Advantageous Effects of Invention

According to the present invention, it is possible to provide a data processing terminal, a data search method, and a non-transitory computer readable medium storing a control program to facilitate an operation to display desired data among a set of similar data using a touch panel.

### Brief Description of Drawings

Fig. 1 is a block diagram showing a configuration of a data processing terminal according to a first exemplary embodiment of the present invention;
Fig. 2 is a flowchart showing a flow of a process of a data search method according to the first exemplary embodiment of the present invention;
Fig. 3 is a block diagram showing a configuration of a mobile phone terminal according to a second exemplary embodiment of the present invention;
Fig. 4 is a flowchart illustrating a flow of a data display and search process according to the second exemplary embodiment of the present invention;
Fig. 5 is a view showing an example of display of a data list according to the second exemplary embodiment of the present invention;
Fig. 6 is a view showing an example of a list display field of candidates for a separator according to the second exemplary embodiment of the present invention;
Fig. 7 is a view showing an example in which a display position is moved to a selected separator according to the second exemplary embodiment of the present invention;
Fig. 8 is a flowchart illustrating a flow of a data display and search process according to a third exemplary embodiment of the present invention;
Fig. 9 is a view showing an example of display of a data list according to the third exemplary embodiment of the present invention;
Fig. 10 is a view showing an example of display of a separator selection field according to the third exemplary embodiment of the present invention;
Fig. 11 is a view showing an example in which a display position is moved to a selected separator according to the third exemplary embodiment of the present invention;
Fig. 12 is a view illustrating a problem of tab display;
Fig. 13 is a view illustrating a problem of tab display;
Fig. 14 is a flowchart illustrating a flow of a data display and search process according to a fourth exemplary embodiment of the present invention;
Fig. 15 is a view showing an example of display of a data list according to the fourth exemplary embodiment of the present invention; and
Fig. 16 is a view showing an example of a case where a data part is not displayed according to the fourth exemplary embodiment of the present invention.

### Description of Embodiments

Specific exemplary embodiments of the present invention will be described hereinafter in detail with reference to the drawings. It is noted that in the description of the drawings, the same elements will be denoted by the same reference symbols and redundant description will be omitted.

### <First exemplary embodiment>

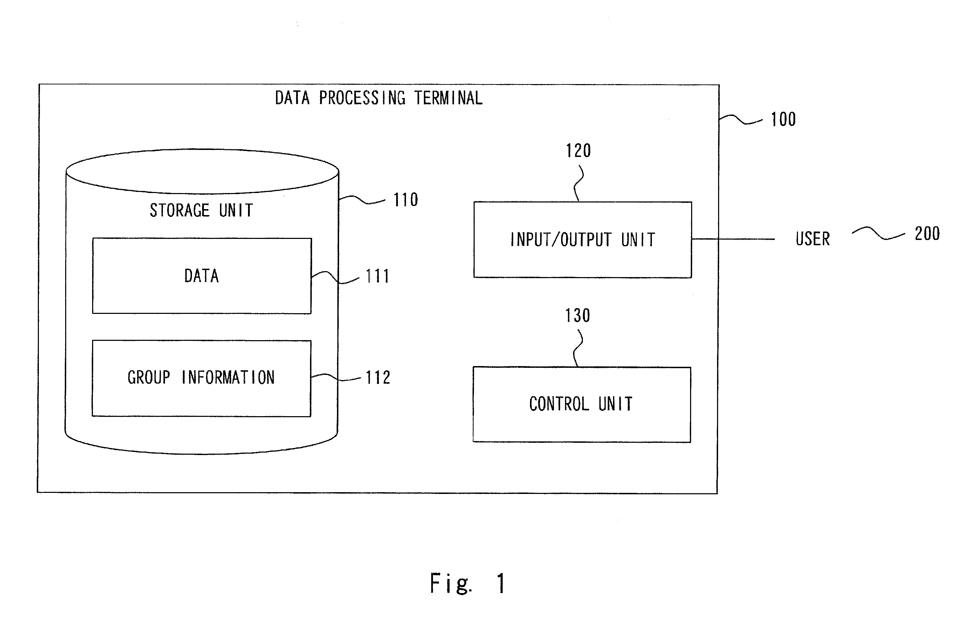

Fig. 1 is a block diagram showing a configuration of a data processing terminal 100 according to a first exemplary embodiment of the present invention. The data processing terminal 100 is a terminal device that displays a data set containing many similar entries on a display device such as a screen for a user 200, accepts an operation to search for desired data from the user 200, and displays the retrieved data on the display device. The data processing terminal 100 is touch panel type electronic equipment, for example.

The data processing terminal 100 includes a storage unit 110, an input/output unit 120, and a control unit 130. The storage unit 110 is a storage device that stores data 111 and group information 112. The storage unit 110 is nonvolatile storage device such as hard disk or flash memory, for example. The data 111 is a data set containing many similar entries such as a telephone directory. The group information 112 is identification information of each group when the data 111 is classified into a plurality of groups.

The input/output unit 120 is a display device that allocates and displays areas that are selectable by a user 200 for the data 111 and the group information 112. At the same time, the input/output unit 120 is an input device that accepts an operation of selection of the selectable area from the user 200. Thus, the input/output unit 120 is a device that serves both as a display device and an input device. The input/output unit 120 is a tough panel type screen device, for example. The input/output unit 120 detects that a finger of the user 200 or an input device such as a pen used by the user 200 comes into contact with the screen and performs processing in accordance with the contact position or area, the contact time or the like.

The control unit 130 is a control device that controls the storage unit 110 and the input/output unit 120. The control unit 130 reads and runs a control program (not shown) that is stored in the storage unit 110 or the like and thereby functions as a data display and search process according to the first exemplary embodiment of the present invention. The control unit 130 is a CPU (Central Processing Unit), for example.

The control unit 130 associates first group information, which is part of a plurality of group information 112, with first data relevant to the first group information and displays them as areas selectable by the user 200 on the input/output unit 120. When the user 200 makes a selection of the first group information, the control unit 130 displays a group selection area for selecting any of the plurality of group information 112 including second group information, which is not displayed, on the input/output unit 120. Then, when the user 200 makes a selection of the second group information through the group selection area, the control unit 130 acquires second data relevant to the selected second group information from the storage unit 110. The control unit 130 then associates the second group information with the second data and displays them as areas selectable by the user 200 on the input/output unit 120.

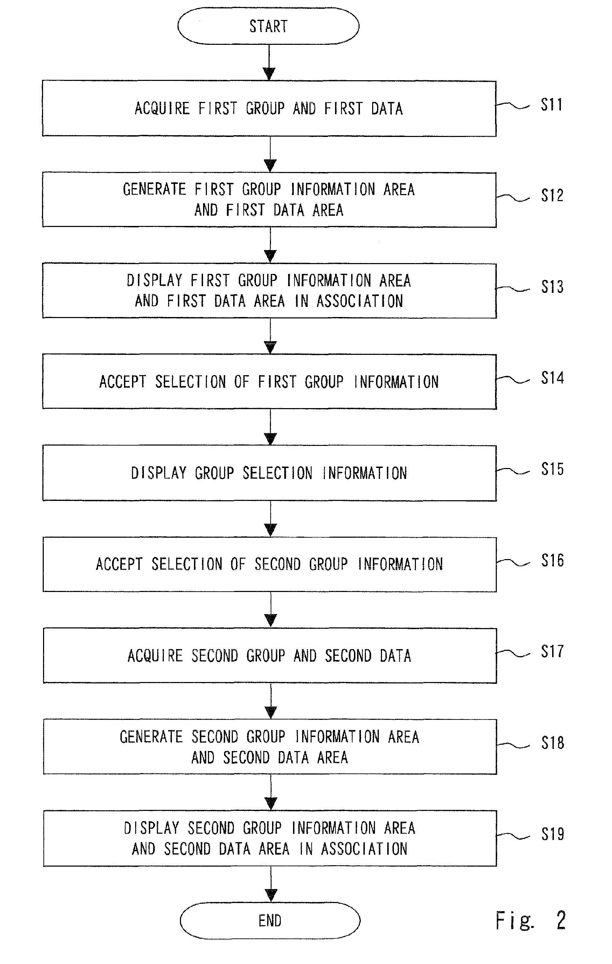

Fig. 2 is a flowchart showing a flow of a process of a data search method according to the first exemplary embodiment of the present invention. First, the control unit 130 acquires first group and first data relevant to the first group information from the storage unit 110 (S11). Next, the control unit 130 generates a first group information area where an area selectable by the user 200 is allocated from the first group information acquired in Step S11. Further, the control unit 130 generates a first data area where an area selectable by the user is allocated from the first data acquired in Step S11 (S12). Then, the control unit 130 displays the first group information area and the first data area in association with each other on the input/output unit 120 (S13).

After that, the control unit 130 accepts a selection of the first group information displayed on the input/output unit 120 from the user 200 (S14). The control unit 130 then displays a group selection area for selecting any of the plurality of group information 112 including the second group information, which is not displayed, on the input/output unit 120 (S15).

Then, the control unit 130 accepts a selection of second group information from the user 200 through the group selection area (S 16). The control unit 130 then acquires the selected second group information and second data relevant to the selected second group information from the storage unit 110 (S17). The control unit 130 then generates a second group information area where an area selectable by the user 200 is allocated from the second group information acquired in Step S 17. Further, the control unit 130 generates a second data area where an area selectable by the user is allocated from the second data acquired in Step S17 (S 18). Then, the control unit 130 displays the second group information area and the second data area in association with each other on the input/output unit 120 (S 19).

As described above, according to the first exemplary embodiment of the present invention, when desired data is the second data, even if the first data is being displayed on the input/output unit 120, the user 200 can display the desired second data on the input/output unit 120 simply by an operation of selecting the first group information and the second group information without troublesome scrolling of the input/output unit 120. Thus, according to the first exemplary embodiment of the present invention, it is possible to facilitate an operation to display desired data among a set of similar data using a touch panel.

### <Second exemplary embodiment>

In a second exemplary embodiment of the present invention, the way to facilitate immediate access to data classified into groups in electronic equipment having a telephone directory, such as a mobile phone terminal, for example, is described. According to the second exemplary embodiment of the present invention, there is an advantageous effect that it is possible to efficiently find personal data stored in a telephone directory.

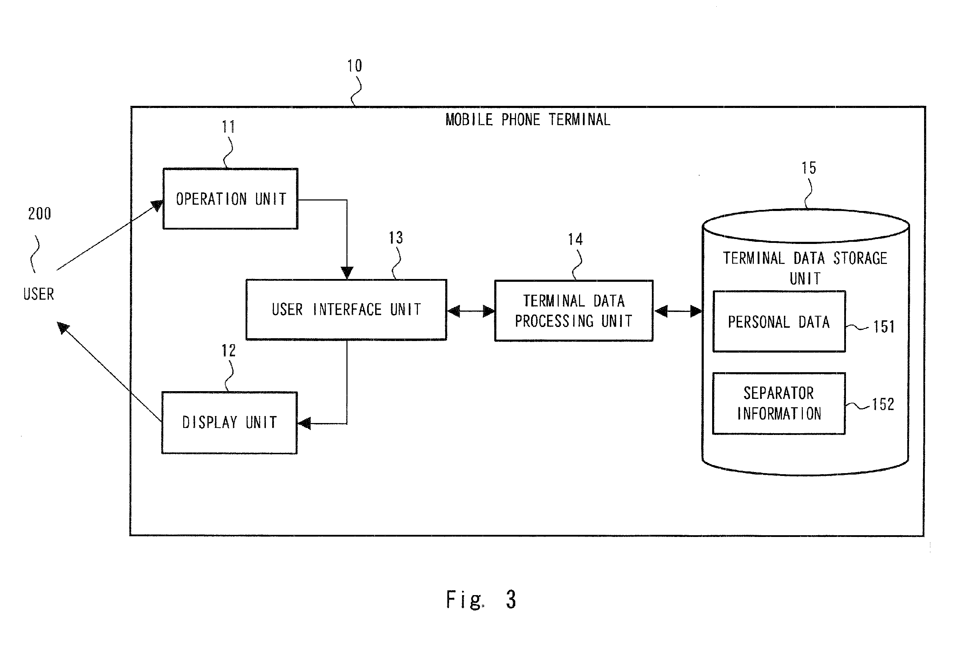

Fig. 3 is a block diagram showing a configuration of a mobile phone terminal 10 according to the second exemplary embodiment of the present invention. The mobile phone terminal 10 is one example of the data processing terminal 100 according to the first exemplary embodiment of the present invention. Note that illustration and description of a telephone function in the mobile phone terminal 10 according to the second exemplary embodiment of the present invention are omitted. Note also that the mobile phone terminal 10 according to the second exemplary embodiment of the present invention is specifically implemented by a terminal device such as a mobile phone that operates under a program. Instead of the mobile phone terminal 10, it may be implemented by an information processing device such as a personal computer as long as it is a terminal having a telephone directory function and a telephone function.

The mobile phone terminal 10 includes an operation unit 11, a display unit 12, a user interface unit 13, a terminal data processing unit 14, and a terminal data storage unit 15. The terminal data storage unit 15 is one example of the storage unit 110 in Fig. 1. Specifically, the terminal data storage unit 15 is implemented by a storage device such as memory. Further, the terminal data storage unit 15 stores personal data 151 and separator information 152. The personal data 151 and the separator information 152 are one example of the data 111 and the group information 112 in Fig. 1, respectively.

The operation unit 11 is specifically implemented by an input device such as a touch panel. The operation unit 11 has a function of accepting an input of information in accordance with an input operation of the user 200. The user interface unit 13 is specifically implemented by an input/output interface unit included in the mobile phone terminal 10. The user interface unit 13 has a function of causing the terminal data processing unit 14 to extract the personal data 151 based on information that is input by the user 200 through the operation unit 11. Further, the user interface unit 13 has a function of causing the display unit 12 to display the personal data 151 extracted by the terminal data processing unit 14 and the separator information 152.

The terminal data processing unit 14 is specifically implemented by a CPU of the mobile phone terminal 10 that operates under a control program (not shown). The terminal data processing unit 14 acquires the personal data 151 and the separator information 152 requested from the terminal data storage unit 15 in response to a request from the user interface unit 13. The display unit 12 is specifically implemented by a display device such as a liquid crystal display device. The display unit 12 has a function of displaying information that is output from the user interface unit 1 3.

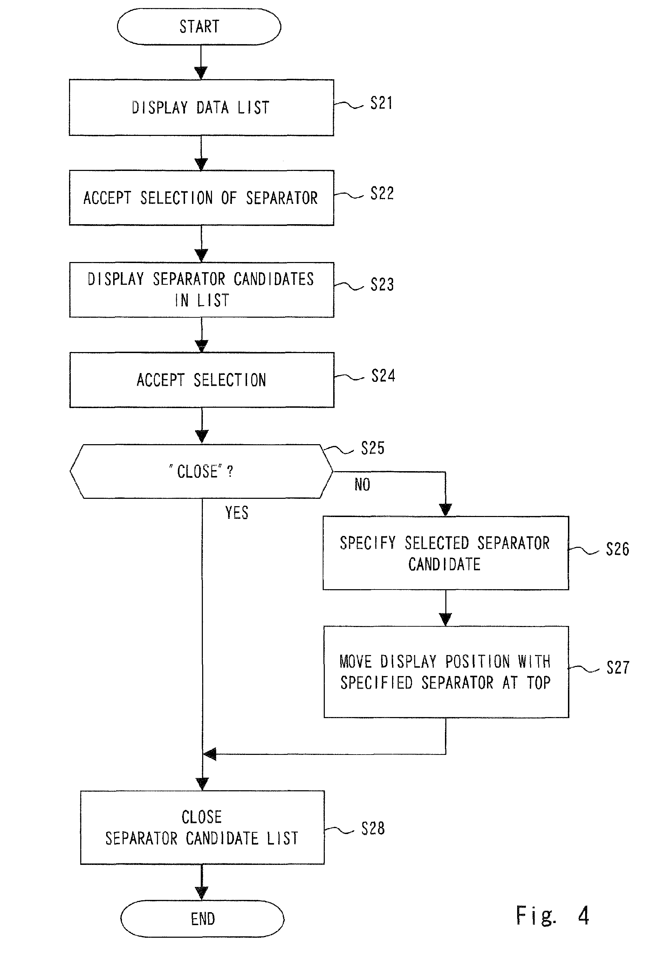

Fig. 4 is a flowchart illustrating a flow of a data display and search process according to the second exemplary embodiment of the present invention. First, the mobile phone terminal 10 displays a data list (S21). Specifically, the terminal data processing unit 14 acquires the personal data 151 and the separator information 152 that are to be initially displayed from the terminal data storage unit 15. Next, the user interface unit 13 outputs the acquired personal data 151 and the separator information 152 to the display unit 12. The user interface unit 13 thereby displays the separator information 152 and the personal data 151 in association with each other on the display unit 12.

Then, the mobile phone terminal 10 accepts a selection of a separator (S22). Specifically, the mobile phone terminal 10 accepts an operation of selecting the separator information 152 from the user 200 through the operation unit 11. The mobile phone terminal 10 then displays separator candidates in a list (S23). Specifically, the terminal data processing unit 14 acquires a plurality of separator information 152 from the terminal data storage unit 15 and generates a separator candidate list display field. The separator candidate list display field includes an area to accept a selection for closing the list display field. The user interface unit 13 then displays the generated separator candidate list display field on the display unit 12.

Then, the mobile phone terminal 10 accepts a selection of an area from the user 200 through the operation unit 11 (S24). At this time, the mobile phone terminal 10 determines whether the selected area is an area to close a list display (S25).

In Step S25, when the selected area is different from an area to close a list display, the mobile phone terminal 10 specifies a selected separator candidate (S26). To be specific, the terminal data processing unit 14 acquires the separator information 152 corresponding to the selected separator candidate and the personal data 151 from the terminal data storage unit 15. Then, the mobile phone terminal 10 moves the display position with the specified separator at the top (S27). The terminal data processing unit 14 thereby generates display information associating the acquired separator information 152 and the personal data 151. Then, the user interface unit 13 displays the display information on the display unit 12. In other words, on the display unit 12, display jumps to the position of the separator.

When the area selected in Step S25 is an area to close a list display field, or after Step S27, the mobile phone terminal 10 closes the separator candidate list display field (S28).

Note that, in Step S23, in the case where not all of separators are displayed on the screen because of a large number of items of separator information, display may jump to a separator not being displayed by an operation that the user 200 performs a specified gesture or shakes the mobile phone terminal 10, for example, so that the separator is displayed on the display unit 12.

An operation of the mobile phone terminal 10 is described with respect to a specific example. For example, in the case of displaying a telephone directory in a list in the order of the Japanese syllabary, separators such as "A", "KA", "SA", ... "WA" (Japanese syllabary characters) are prepared in advance. Specifically, it is assumed that in the terminal data storage unit 15, information such as a plurality of names are stored as the personal data 151, and identification information of each group when the plurality of names or the like are classified into a plurality of groups are defined as the separator information 152. The separator is one example of the above-described group information 112.

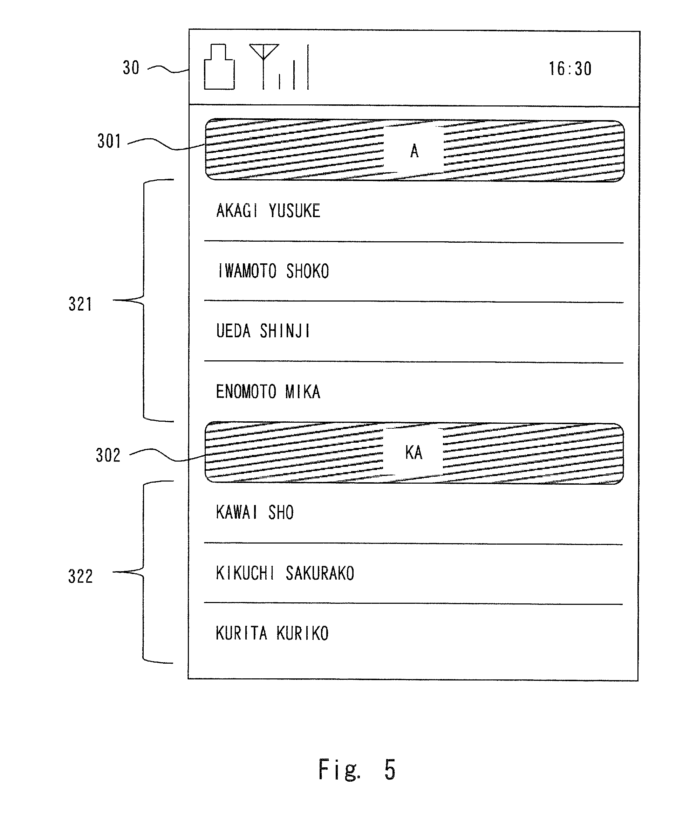

Fig. 5 is a view showing a screen 30, which is an example of display of a data list according to the second exemplary embodiment of the present invention. In the example of Fig. 5, on the display unit 12, a list of personal data belonging to one separator is displayed between one separator and the next separator. A separator 301 shows that a separator name is "A" (Japanese syllabary characters). A separator 302 shows that a separator name is "KA". A data list 321 shows a state where a plurality of data classified as the separator 301 are displayed in a list. To be specific, the data list 321 is a list of personal data containing names beginning with "A" (Japanese syllabary characters). Thus, the data list 321 is displayed between the separator 301 indicating "A" (Japanese syllabary characters) and the separator 302 indicating "KA". Further, a data list 322 shows a state where a plurality of data classified as the separator 302 are displayed in a list. To be specific, the data list 322 is a list of personal data containing names beginning with "KA". Note that, however, in the data list 322, all of the data classified as the separator 302 are not always displayed. Likewise, there are three or more separator information 152. Further, depending on the number of data in the data list 321, there is a case where the separator 302 and the data list 322 are not displayed on the screen 30.

If the data list 321 and the data list 322 are arranged without any classification, the user 200 sees the data list 321 and the data list 322 as one group and thereby sees all data as being in the same category. As a result, it is troublesome for the user 200 to visually find desired data from a large number of data lists. On the other hand, according to the second exemplary embodiment of the present invention, the separator 302 is inserted between the data list 321 and the data list 322, so that the user 200 can easily visually find a boundary between groups, which makes it easy to determine whether desired data is displayed or not.

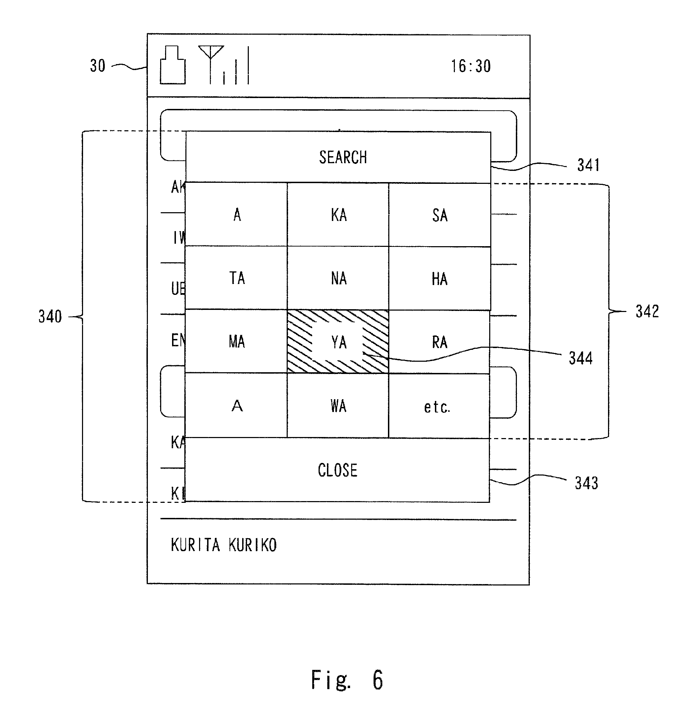

Fig. 6 is a view showing an example of a list display field of candidates for a separator according to the second exemplary embodiment of the present invention. Specifically, Fig. 6 shows the case where a separator list display area 340 is displayed on the screen 30 when the separator 301 or the separator 302 is selected by the user 200 in Fig. 5. The separator list display area 340 includes a header 341, a separator candidate selection area 342, and a non-display selection area 343. The separator candidate selection area 342 includes a plurality of separator information 152 as areas selectable by the user 200. For example, a separator selection area 344 shows that the separator name is "YA". Thus, the separator selection area 344 is a list of personal data containing names beginning with "YA". Further, the non-display selection area 343 is an area to accept a selection to close the separator list display area 340.

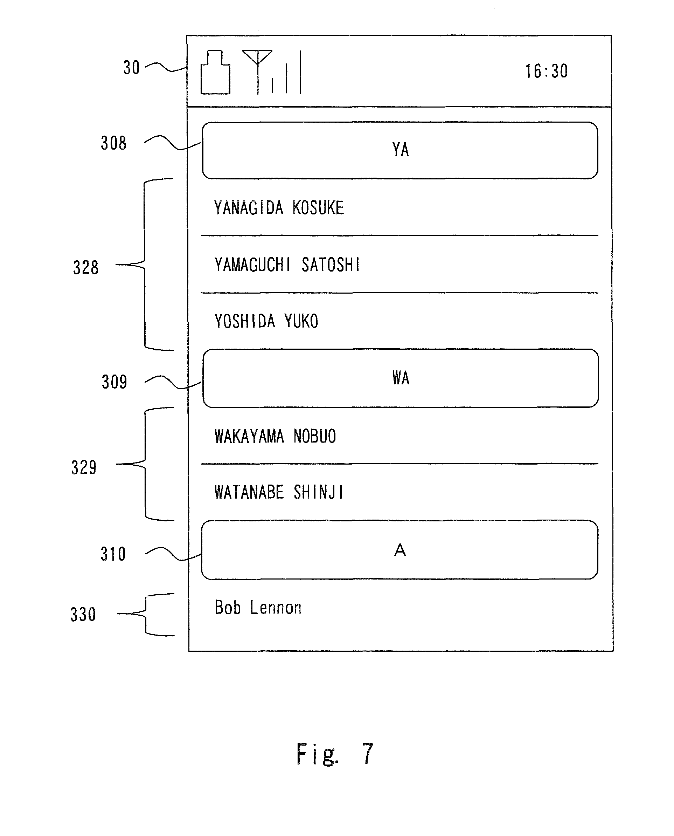

Fig. 7 is a view showing an example in which a display position is moved to a selected separator according to the second exemplary embodiment of the present invention. Specifically, Fig. 7 shows the case where a separator 308, a data list 328, a separator 309, a data list 329, a separator 310 and a data list 330 are displayed in this order on the screen 30 when the separator selection area 344 is selected by the user 200 in Fig. 6. The separator 308 shows that the separator name is "YA". The data list 328 is a list of personal data containing names beginning with "YA". The separator 309 shows that the separator name is "WA". The data list 329 is a list of personal data containing names beginning with "wa". The separator 310 shows that the separator name is "A" (Alphabet). The data list 330 is a list of personal data containing names beginning with "A" to "Z" (Alphabet). In other words, Fig. 7 shows the state where the separator 308 is displayed at the top, jumping from the state where the case where the separator 301 is displayed at the top in Fig. 5.

Note that the separator information 152 can be based on classification by any group attribute, not limited to classification by the Japanese syllabary.

Advantageous effects of the second exemplary embodiment of the present invention described above are as follows. A first advantageous effect is to allow a user to easily visually determine a boundary between groups by displaying a separator for grouping data. A second advantageous effect is to allow a user to efficiently find desired personal data by displaying candidates for a separator in a list upon selection of the separator and jumping to the position of the separator upon selection of any of the candidates.

Further, the second exemplary embodiment of the present invention can be described in another way as follows. The user interface unit 13 displays a group selection area on the display unit 12 in preference to the first data that has been displayed on the display unit 12. The group selection area is the separator list display area 340 in Fig. 6, for example. Thus, the separator list display area 340 is displayed on the screen 30 in preference to the data list 321 and the data list 322.

Further, the terminal data processing unit 14 acquires the second group information from the terminal data storage unit 15 when it accepts a selection of the first group information from the user 200. Then, the user interface unit 13 displays an area selectable in the second group information as the group selection area, together with the first group information, on the display unit 12. For example, the terminal data processing unit 14 acquires the separator information 152, which is equivalent to the separator selection area 344, from the terminal data storage unit 15 in order to generate the separator candidate selection area 342. The separator selection area 344 is equivalent to the second group information which is not shown in Fig. 5.

Further, the display unit 12 displays selectable areas in the first group information and the first data in the same size. For example, in Fig. 5, the separator 301 and each data of the data list 321 are displayed in the same size. The user 200 can thereby see the data easily. Note that, as shown in Fig. 7, the display unit 12 also displays the second group information and an area selectable in the second data in the same size.

### <Third exemplary embodiment>

In a third exemplary embodiment of the present invention, a case where data to be displayed and searched are still images or moving images is described as another example of the first exemplary embodiment of the present invention. In other words, a data processing terminal according to the third exemplary embodiment of the present invention is a sill image or moving image viewer. Note that the data processing terminal according to the third exemplary embodiment of the present invention can be implemented by making alternations to the mobile phone terminal 10 described above. The elements of the data processing terminal according to the third exemplary embodiment of the present invention are substantially the same as those of the mobile phone terminal 10. Therefore, in the following description, the data processing terminal according to the third exemplary embodiment of the present invention is the mobile phone terminal 10 and described using the same reference symbols, and the illustration and description thereof are omitted.

The mobile phone terminal 10 according to the third exemplary embodiment of the present invention displays a screen on which an attribute in a plurality of group information can be specified as a group selection area on the display unit 12 when it accepts a selection of the first group information from the user 200. Then, when it accepts a selection of an attribute through the group selection area from the user 200, the mobile phone terminal 10 acquires group information corresponding to the specified attribute as the second group information from the terminal data storage unit 15. Then, the mobile phone terminal 10 acquires the second data relevant to the second group information from the terminal data storage unit 15.

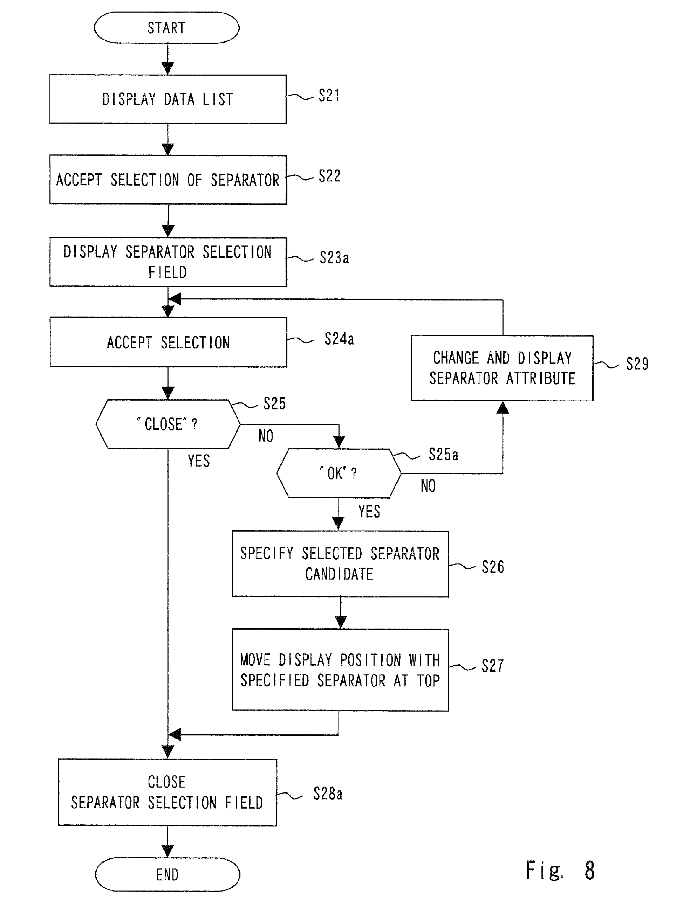

Fig. 8 is a flowchart illustrating a flow of a data display and search process according to the third exemplary embodiment of the present invention. First, Steps S21 and S22 are the same as those of Fig. 4 and not redundantly described. The mobile phone terminal 10 then displays a separator selection field (S23a). Specifically, the terminal data processing unit 14 generates a selection field in which an attribute of a separator can be specified. The separator selection field includes an area to accept a selection to close the selection field, an area to change an attribute, an area to set an attribute, and an initial attribute of the separator. Then, the user interface unit 13 displays the generated separator selection field on the display unit 12.

Then, the mobile phone terminal 10 accepts a selection of an area from the user 200 through the operation unit 11 (S24a). At this time, the mobile phone terminal 10 determines whether the selected area is an area to close the selection field (S25).

In Step S25, when the selected area is other than an area to close the selection field, the mobile phone terminal 10 determines whether the selected area is an area to set an attribute (S25a). When the selected area is an area to change an attribute, the mobile phone terminal 10 changes and displays the attribute of a separator (S29). Specifically, the terminal data processing unit 14 updates the selection field so as to display the attribute with the changed selection field. Then, the user interface unit 13 displays the updated selection field on the display unit 12.

Further, in Step S25a, when the selected area is an area to set an attribute, the mobile phone terminal 10 performs Steps S26 and S27 in the same manner as in Fig. 4.

When the selected area is an area to close the selection field in Step S25, or after Step S27, the mobile phone terminal 10 closes the separator selection field (S28a).

An operation of the mobile phone terminal 10 according to the third exemplary embodiment of the present invention is described using a specific example. For example, the mobile phone terminal 10 according to the third exemplary embodiment of the present invention is a viewer of still images or moving images. For example, in the case of displaying thumbnails of image data in month-by-month groups, separators such as "July 2010" and "June 2010" are prepared. Between one separator and the next separator, thumbnails that belong to the separator are displayed in a list. When the separator is selected, a screen to specify year and month is displayed, and, when year and month are specified, display jumps to the position of the separator.

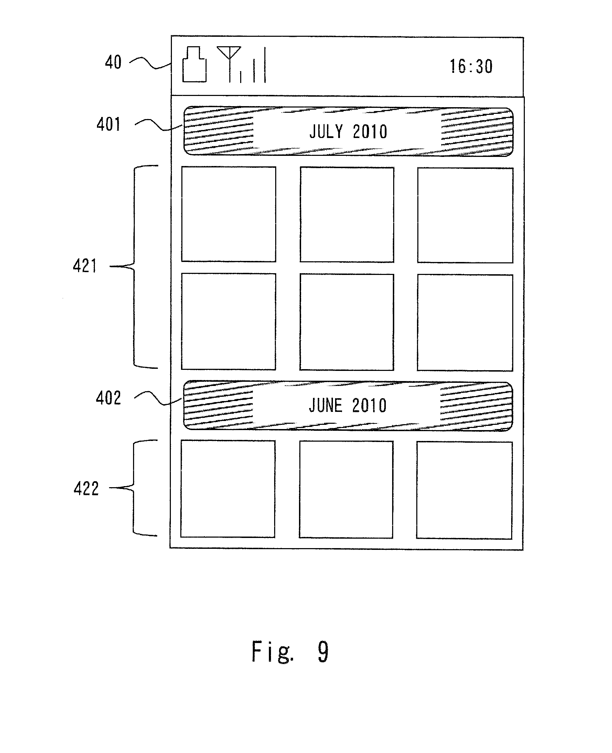

Fig. 9 is a view showing a screen 40, which is an example of display of a data list according to the third exemplary embodiment of the present invention. In the example of Fig. 9, between one separator and the next separator, a list of image data that belong to the separator is displayed on the display unit 12. A separator 401 shows that the separator name is "July 2010". A separator 402 shows that the separator name is "June 2010". A data list 421 shows the state where a plurality of image data that is classified as the separator 401 are displayed in a list. A data list 422 shows the state where some of a plurality of image data that is classified as the separator 402 are displayed in a list.

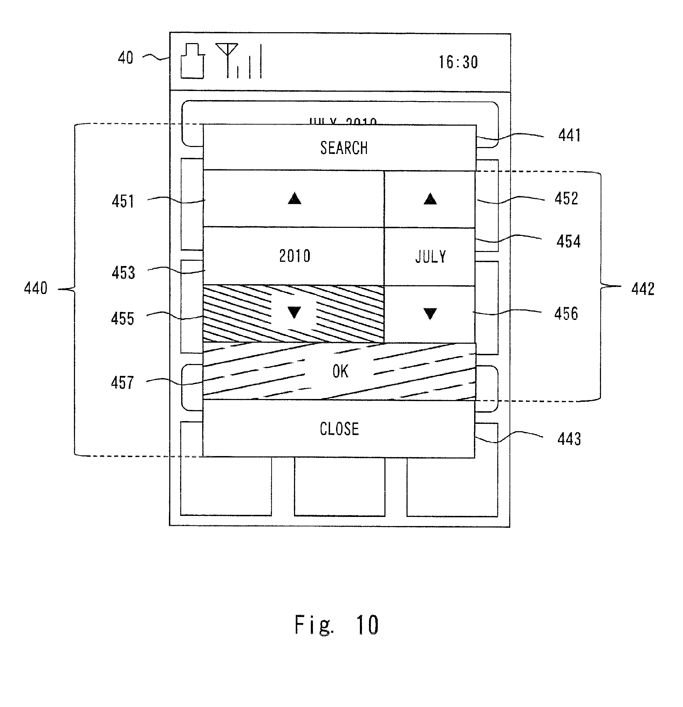

Fig. 10 is a view showing an example of display of a separator selection field according to the third exemplary embodiment of the present invention. Specifically, Fig. 10 shows the case where a separator attribute display area 440 is displayed on a screen 40 when a separator 401 or a separator 402 is selected by the user 200 in Fig. 9. The separator attribute display area 440 contains a header 441, a separator attribute selection area 442, and a non-display selection area 443. The separator attribute selection area 442 contains, as areas selectable by the user 200, a year selection area 451, a month selection area 452, a year selection area 455, a month selection area 456, and a selection confirmation area 457. The year selection area 451 is an area to add "year", which is an example of a separator attribute. The month selection area 452 is an area to add "month", which is an example of a separator attribute. The year selection area 455 is an area to subtract "year". The month selection area 456 is an area to subtract "month". Further, the separator attribute selection area 442 contains a year display area 453 and a month display area 454, which are areas to display initial display or an attribute after update. Further, the non-display selection area 443 is an area to accept a selection for closing the separator attribute display area 440.

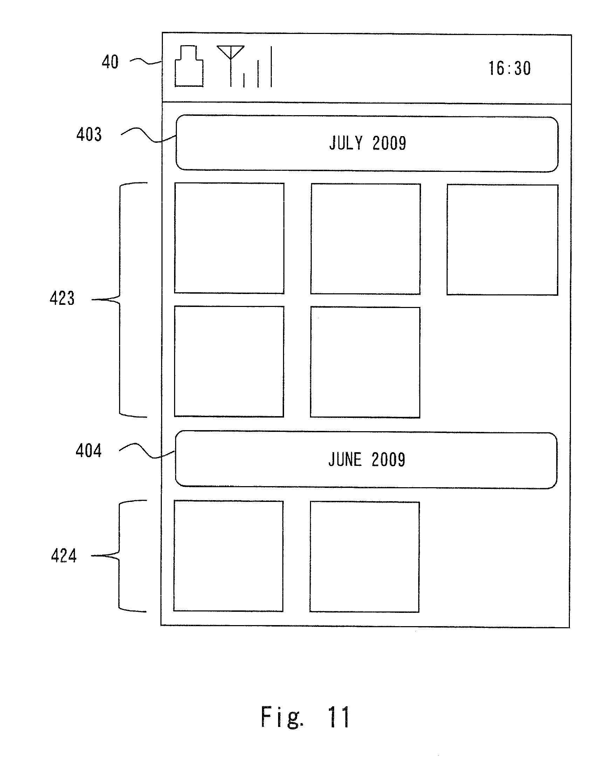

Fig. 11 is a view showing an example in which a display position is moved to a selected separator according to the third exemplary embodiment of the present invention. Specifically, Fig. 11 shows the case where a separator 403, a data list 423, a separator 404 and a data list 424 are displayed in this order when the selection confirmation area 457 is selected after the year selection area 455 is selected by the user 200 in Fig. 10. The separator 403 shows that the separator name is "July 2009". The data list 423 is a list of image data that are updated in "July 2009". The separator 404 shows that the separator name is "June 2009". The data list 424 is a list of image data that are updated in "June 2009". In other words, Fig. 11 shows the state where the separator 403 is displayed at the top, jumping from the state where the case where the separator 401 is displayed at the top in Fig. 9.

Note that, because emails are also often classified on the basis of time, separators may be prepared as the separator information 152 on a month by month basis in the same manner as viewers.

### <Fourth exemplary embodiment>

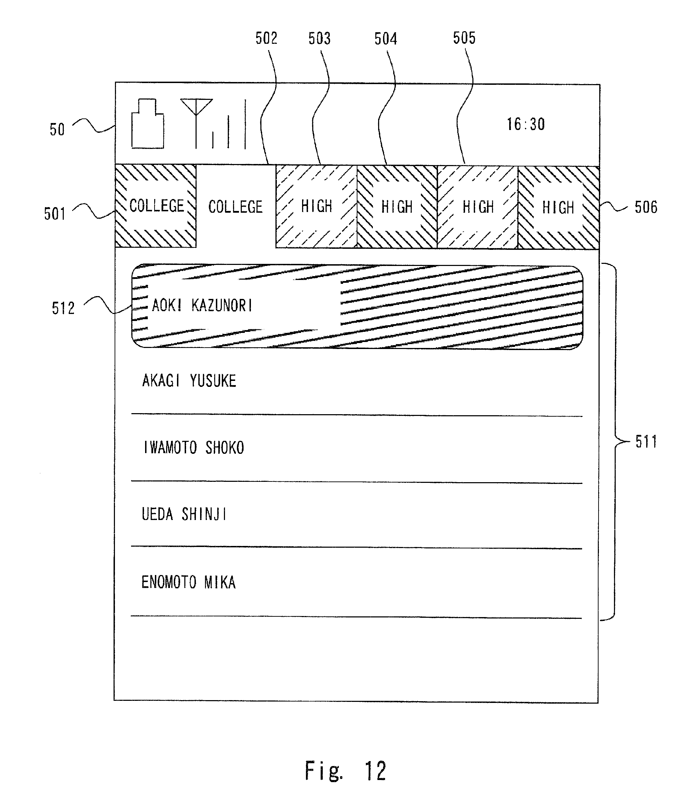

One way to display a large number of data in a plurality of groups is tab display that displays a data list using a tab. As a tab, an arbitrary name is often assigned in advance to a group attribute by a user. Fig. 12 is a view showing a screen 50 as an example of tab display. The screen 50 includes tab areas 501 to 506. In this example, a tab area 501 is "college classmate", a tab area 502 is "college club", a tab area 503 is "high school senior", a tab area 504 is "high school senior", a tab area 505 is "high school sophomore", and a tab area 506 is "high school club".

Fig. 12 shows the state where the tab area 502 is selected. A data list 511 is a set of data classified as the tab area 502. For example, members of "college club" fall into the data list 511. Data 512 is data contained in the data list 511.

Because six tabs, the tab areas 501 to 506, are displayed in the screen 50 in Fig. 12, it is difficult to distinguish among the names of group attributes of those tabs. For example, the tab area 501 and the tab area 502 are the same in the displayed character "college". Likewise, the tab areas 503 to 506 are the same in the displayed character "high". One way to increase the number of characters displayed in the tab area is to display the whole name of a group attribute in the selected tab area.

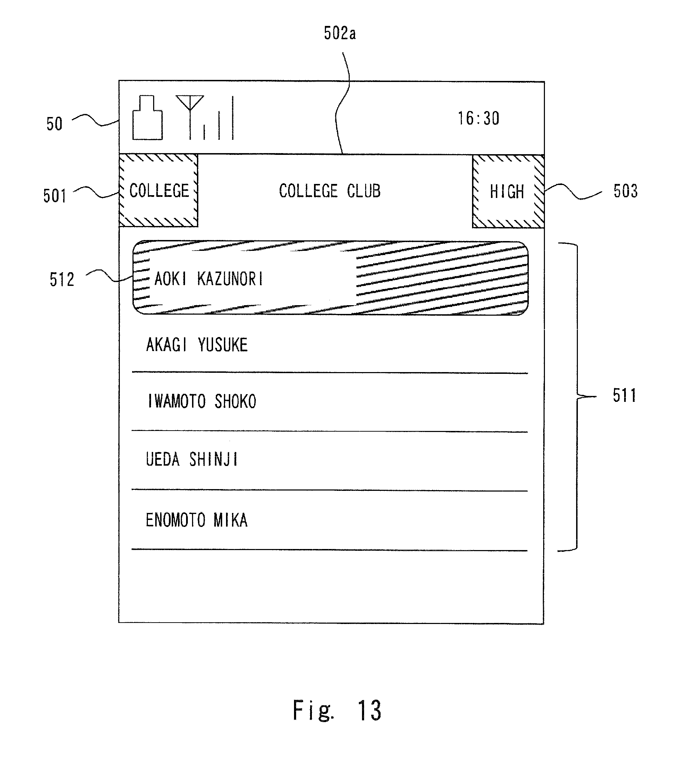

Fig. 13 is a view showing an example of the screen 50 in the case where the whole name of a group attribute is displayed in the selected tab area. In this example, because "college club" is displayed in the tab area 502a, it can be easily distinguished from the tab area 501. On the other hand, because the display width of the tab area 502a is large, the tab areas 504 to 506 cannot be displayed in the screen 50.

Thus, in the case of list display using tabs, it is necessary to limit information displayed in each tab in order to increase the number of items of tabs to be displayed in one screen. However, when a long name is set for a group attribute at the time of classification by group attributes or the like, the tabs are less distinguishable. On the other hand, in order to increase information displayed in each tab, it is necessary to reduce the number of tables to be displayed in one screen. This makes it difficult to see many tabs at a glance. Further, in Fig. 12, for example, the display widths of the non-selected tab areas 501 and 503 to 506 are small. Thus, if tab display is used in a touch panel type data processing terminal to which the present invention is applied, it is not possible to deal with a case where it is necessary to have an area that can be selectively touched by a user's finger or the like, which is the problem described earlier.

In view of this, a fourth exemplary embodiment of the present invention is constructed by making modifications to the data processing terminal 100 according to the first exemplary embodiment of the present invention described above so as to facilitate user operation even when the name of a group attribute is set arbitrarily and when input and output areas are combined and a certain amount of size is required for a selection area. Note that the elements of the data processing terminal 100 according to the fourth exemplary embodiment of the present invention may be substantially the same as those of the data processing terminal 100 according to the second or third exemplary embodiment of the present invention described above. In the following description, the data processing terminal according to the fourth exemplary embodiment of the present invention is the mobile phone terminal 10 and described using the same reference symbols, and the illustration and description thereof are omitted.

Specifically, the mobile phone terminal 10 according to the fourth exemplary embodiment of the present invention disables display of a selectable area in the first data displayed on the display unit 12 and enables display of a group selection area on the display unit 12 when it accepts a selection of the first group information from the user 200.

Further, the terminal data storage unit 15 stores, for data satisfying a specified condition among a plurality of data, specific group information, which is identification information of a specific group to which the data belongs in overlap with group information classified into groups. Then, the user interface unit 13 displays the specific group information and data relevant to the specific group information as selectable areas on the display unit 12 in preference to the first group information and the first data.

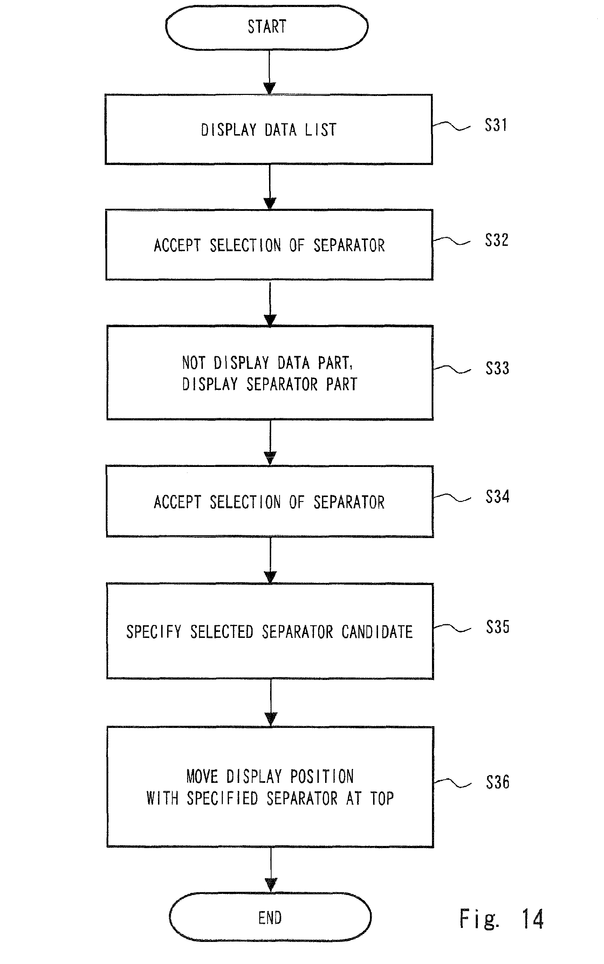

Fig. 14 is a flowchart illustrating a flow of a data display and search process according to the fourth exemplary embodiment of the present invention. First, as a precondition, it is assumed that the user 200 has classified the personal data 151 that is selected frequently into "favorite", which is the specific group information. Specifically, it is assumed that the terminal data storage unit 15 stores the separator information 152, which is the specific group information, and the personal data 151 that is classified as the specific group information in association with each other. The personal data 151 that is classified as the specific group information may be classified also as other group information. In other words, the personal data 151 may be grouped into a plurality of group information in an overlapped manner.

The mobile phone terminal 10 displays a data list (S31). Specifically, the terminal data processing unit 14 acquires the separator information 152, which is the specific group information, and the personal data 151 that is relevant to the specific group information from the terminal data storage unit 15 as information to be initially displayed. Note that, depending on the number of data of the personal data 151, when there is an extra space in one screen, other personal data 151 and separator information 152 are acquired in addition. Then, the user interface unit 13 outputs the acquired personal data 151 and separator information 152 to the display unit 12. The user interface unit 13 thereby displays the separator information 152 and the personal data 151 in association with each other on the display unit 12. At this time, the specific group information is displayed at the top.

Next, the mobile phone terminal 10 accepts a selection of a separator (S32). Note that Step S32 is the same as S21 and S22 in Fig. 4 and detailed description there of is omitted.

At this time, the mobile phone terminal 10 ceases to display a data part and displays a separator part (S33). Specifically, the terminal data processing unit 14 first acquires the non-display separator information 152 from the terminal data storage unit 15. Then, the user interface unit 13 disables displays of the data list that has been displayed on the display unit 12. At the same time, the user interface unit 13 displays the separator information 152 that is acquired by the terminal data processing unit 14 on the display unit 12. The separator information that has not been displayed is thereby displayed in preference to the data list that has been displayed. In other words, at this point, a list of separator information only is displayed on the display unit 12.

Then, the mobile phone terminal 10 accepts a selection of a separator from the user 200 through the operation unit 11 (S34). The mobile phone terminal 10 then specifies a selected separator candidate (S35). After that, the mobile phone terminal 10 moves the display position with the specified separator at the top (S36). Note that Steps S35 and S36 are the same as S26 and S27 in Fig. 4 and detailed description there of is omitted.

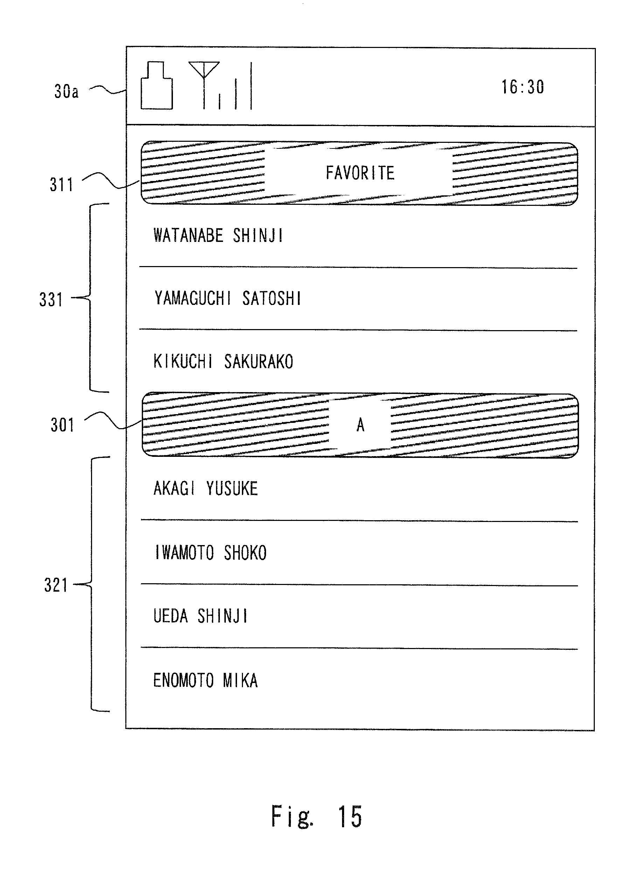

Fig. 15 is a view showing a screen 30a, which is an example of display of a data list according to the fourth exemplary embodiment of the present invention. A separator 311 shows that the separator name is "favorite". A data list 331 shows the state where a plurality of data classified as the separator 311 are displayed in a list. Specifically, the data list 331 is a list of personal data that have been classified in advance by the user 200. Thus, the separator 311 is a classification system different from other separators. The separator 301 and the data list 321 are the same as those of Fig. 5.

As described above, the user interface unit 13 according to the fourth exemplary embodiment of the present invention displays the separator 311, which is specific group information, and the data list 331 at the top in preference to the separator 301 and the data list 321, which are originally displayed at the top as initial display. It is assumed that data likely to be selected are classified as the specific group information. This eliminates the need to select a separator at least twice to display personal data contained in the data list 331, as in the second exemplary embodiment, for example, thereby more easily displaying desired data by the user 200.

Further, although a list display field of separator candidates is used to select a non-display separator in initial display in the second exemplary embodiment, there is a possibility that names are not displayed in the list display field when the name of a separator attribute is set arbitrarily as described above. In view of this, in the fourth exemplary embodiment of the present invention, only the separator part of the same area size as the separator part when displayed together with the data part is displayed. In other words, the data part is not displayed.

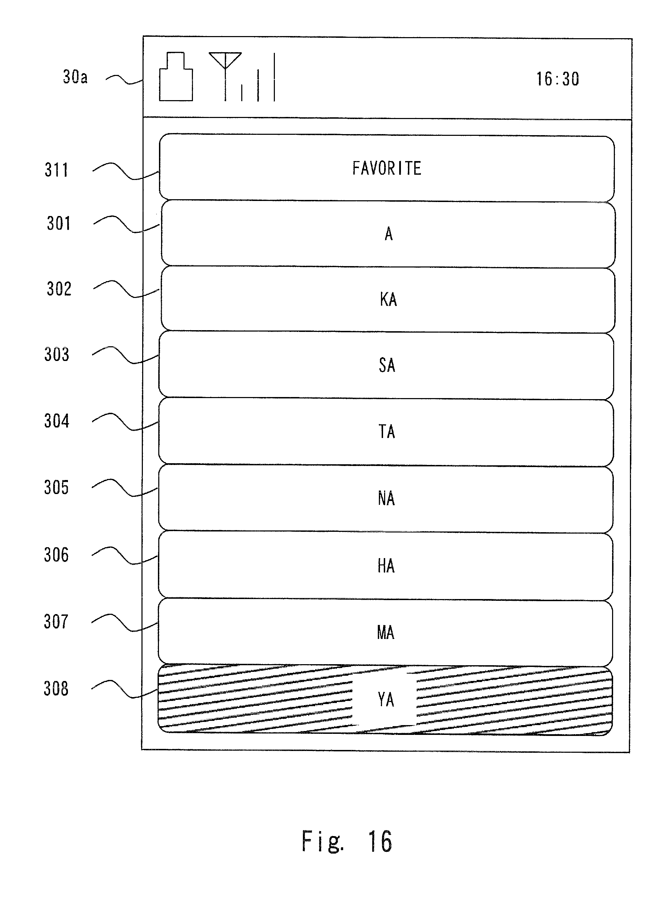

Fig. 16 is a view showing an example of a case where a data part is not displayed according to the fourth exemplary embodiment of the present invention. Fig. 16 shows the case where the separator 311 and the separators 301 to 308 are displayed on the screen 30a when the separator 311 or 301 is selected by the user 200 in Fig. 15. The separator 311 and the separators 301 to 308 are of the same area size as the area of each data of the data part; for example, the data list 331. Therefore, even when the name of a separator attribute is two characters or more like the separator 311, it can be displayed without any problem. It is thereby possible for the user 200 to easily distinguish a separator. At the same time, because the data part is not displayed, the other separators that have not been displayed in initial display can be displayed as many as possible. It is thereby possible for the user 200 to select the separator 308, for example. The same results and advantageous effects as in Fig. 7 are thereby obtained.

As described above, according to the fourth exemplary embodiment of the present invention, a list can still be seen at a glance even when the area of a separator is allocated, and it is thereby possible to display a grouped identification name, even if it is long, on the separator.

Note that the definition of specific group information may be set by the user 200 or classified automatically in accordance with the frequency of selection.

### <Other exemplary embodiments>

According to the present invention, separators for grouping data are displayed and, when a separator is selected, a list of candidates for the separator is displayed and, when any of the candidates is selected, display jumps to the position of the separator in a mobile phone or a PHS terminal.

Further, the invention is not limited to these embodiments, and various changes in form and details may be made therein without departing from the spirit and scope of the present invention described earlier. For example, although the present invention is described as a hardware configuration in the above exemplary embodiments, the present invention is not limited thereto. The present invention may be implemented by causing a CPU (Central Processing Unit) to execute a computer program to perform a given process. In this case, the program can be stored and provided to the computer using any type of non-transitory computer readable medium. The non-transitory computer readable medium includes any type of tangible storage medium.

Examples of the non-transitory computer readable medium include magnetic storage media (such as floppy disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

The whole or part of the exemplary embodiments disclosed above can be described as, but not limited to, the following supplementary notes.

### (Supplementary note 1)

A data processing terminal comprising:
a storage means for storing a plurality of data and a plurality of group information being identification information of each group when the plurality of data are classified into a plurality of groups in relevance to each other;
an input/output means for displaying the data and the group information by allocating areas selectable by a user; and
a control means for controlling the storage means and the input/output means, wherein
the control means displays first group information being part of the plurality of group information and first data relevant to the first group information in association with each other as the selectable areas on the input/output means,
upon accepting a selection of the first group information from the user, the control means displays, on the input/output means, a group selection area for selecting any of the plurality of group information including second group information not being displayed on the input/output means,
upon accepting a selection of the second group information from the user through the group selection area, the control means acquires second data relevant to the selected second group information from the storage means, and
the control means displays the second group information and the second data in association with each other as the selectable areas on the input/output means.

### (Supplementary note 2)

The data processing terminal according to Supplementary note 1, wherein
the control means displays, on the input/output means, the group selection area in preference to the first data having been displayed on the input/output means.

### (Supplementary note 3)

The data processing terminal according to Supplementary note 1 or 2, wherein
upon accepting a selection of the first group information from the user, the control means acquires the second group information from the storage means, and
the control means displays the selectable areas in the second group information, together with the first group information, as the group selection area on the input/output means.

### (Supplementary note 4)

The data processing terminal according to Supplementary note 1 or 2, wherein
upon accepting a selection of the first group information from the user, the control means displays a screen on which an attribute in the plurality of group information can be specified as the group selection area on the input/output means, and
upon accepting a specification of the attribute from the user through the group selection area, the control means acquires group information corresponding to the specified attribute as the second group information from the storage means, and acquires second data relevant to the second group information from the storage means.

### (Supplementary note 5)

The data processing terminal according to any one of Supplementary notes 1 to 4, wherein
upon accepting a selection of the first group information from the user, the control means ceases to display the selectable area in the first data displayed on the input/output means, and displays the group selection area on the input/output means.

### (Supplementary note 6)

The data processing terminal according to any one of Supplementary notes 1 to 5, wherein
the storage means further stores, for data satisfying a specified condition among the plurality of data, specific group information being identification information of a specific group to which the data belongs in overlap with the group information classified into groups, and
the specific group information and data relevant to the specific group information are displayed in association with each other as the selectable areas on the input/output means in preference to the first group information and the first data.

### (Supplementary note 7)

The data processing terminal according to any one of Supplementary notes 1 to 6, wherein
the input/output means displays the selectable areas in the first group information and the first data in the same size.

### (Supplementary note 8)

A data search method comprising:
acquiring, from a storage unit that stores a plurality of data and a plurality of group information being identification information of each group when the plurality of data are classified into a plurality of groups in relevance to each other, first group information being part of the plurality of group information and first data relevant to the first group information;
generating a first group information area where an area selectable by a user is allocated from the acquired first group information;
generating a first data area where an area selectable by the user is allocated from the acquired first data;
displaying the first group information area and the first data area in association with each other on an input/output unit that can accept a selection of an area from the user;
upon accepting a selection of the first group information area from the user, displaying, on the input/output unit, a group selection area for selecting any of the plurality of group information including second group information not being displayed on the input/output unit;
upon accepting a selection of the second group information from the user through the group selection area, acquiring the selected second group information and second data relevant to the selected second group information from the storage unit;
generating a second group information area where an area selectable by the user is allocated from the acquired second group information;
generating a second data area where an area selectable by the user is allocated from the acquired second data; and
displaying the second group information area and the second data area in association with each other on the input/output unit.

### (Supplementary note 9)

The data search method according to Supplementary note 8, comprising
displaying the group selection area on the input/output unit in preference to the first data area having been displayed on the input/output unit.

### (Supplementary note 10)

The data search method according to Supplementary note 8 or 9, comprising:
upon accepting a selection of the first group information from the user, acquiring the second group information from the storage unit,
generating the second group information area from the acquired second group information, and
displaying the first group information area and the second group information area as the group selection area on the input/output unit.

### (Supplementary note 11)

The data search method according to Supplementary note 8 or 9, comprising:
upon accepting a selection of the first group information from the user, displaying a screen on which an attribute in the plurality of group information can be specified as the group selection area on the input/output unit, and
upon accepting a specification of the attribute from the user through the group selection area, acquiring group information corresponding to the specified attribute as the second group information from the storage unit, and acquiring second data relevant to the second group information from the storage unit.

### (Supplementary note 12)

The data search method according to any one of Supplementary notes 8 to 11, comprising:
upon accepting a selection of the first group information from the user, ceasing to display the first data area displayed on the input/output unit, and displaying the group selection area on the input/output unit.

### (Supplementary note 13)

The data search method according to any one of Supplementary notes 8 to 12, wherein
the storage unit further stores, for data satisfying a specified condition among the plurality of data, specific group information being identification information of a specific group to which the data belongs in overlap with the group information classified into groups,
the method comprising:
acquiring the specific group information and specific data relevant to the specific group information from the storage unit,
generating a specific group information area where an area selectable by the user is allocated from the acquired specific group information;
generating a specific data area where an area selectable by the user is allocated from the acquired data;
displaying the specific group information area and the specific data area in association with each other on the input/output unit in preference to the first group information and the first data.

### (Supplementary note 14)

The data search method according to any one of Supplementary notes 8 to 13, comprising
displaying the first data area and the first group information area in the same size on the input/output unit.

### (Supplementary note 15)

A control program causing a computer to execute a process comprising:
acquiring, from a storage unit that stores a plurality of data and a plurality of group information being identification information of each group when the plurality of data are classified into a plurality of groups in relevance to each other, first group information being part of the plurality of group information and first data relevant to the first group information;
generating a first group information area where an area selectable by a user is allocated from the acquired first group information;
generating a first data area where an area selectable by the user is allocated from the acquired first data;
displaying the first group information area and the first data area in association with each other on an input/output unit that can accept a selection of an area from the user;
upon accepting a selection of the first group information area from the user, displaying, on the input/output unit, a group selection area for selecting any of the plurality of group information including second group information not being displayed on the input/output unit;
upon accepting a selection of the second group information from the user through the group selection area, acquiring the selected second group information and second data relevant to the selected second group information from the storage unit;
generating a second group information area where an area selectable by the user is allocated from the acquired second group information;
generating a second data area where an area selectable by the user is allocated from the acquired second data; and
displaying the second group information area and the second data area in association with each other on the input/output unit.

### (Supplementary note 16)

The control program according to Supplementary note 15, comprising
displaying the group selection area on the input/output unit in preference to the first data area having been displayed on the input/output unit.

### (Supplementary note 17)

The control program according to Supplementary note 15 or 16, comprising:
upon accepting a selection of the first group information from the user, acquiring the second group information from the storage unit,
generating the second group information area from the acquired second group information, and
displaying the first group information area and the second group information area as the group selection area on the input/output unit.

### (Supplementary note 18)

The control program according to Supplementary note 15 or 16, comprising:
upon accepting a selection of the first group information from the user, displaying a screen on which an attribute in the plurality of group information can be specified as the group selection area on the input/output unit, and
upon accepting a specification of the attribute from the user through the group selection area, acquiring group information corresponding to the specified attribute as the second group information from the storage unit, and acquiring second data relevant to the second group information from the storage unit.

### (Supplementary note 19)

The control program according to any one of Supplementary notes 15 to 18, comprising:
upon accepting a selection of the first group information from the user, ceasing to display the first data area displayed on the input/output unit, and displaying the group selection area on the input/output unit.

### (Supplementary note 20)

The control program according to any one of Supplementary notes 15 to 19, wherein
the storage unit further stores, for data satisfying a specified condition among the plurality of data, specific group information being identification information of a specific group to which the data belongs in overlap with the group information classified into groups,
the program comprising:
acquiring the specific group information and specific data relevant to the specific group information from the storage unit,
generating a specific group information area where an area selectable by the user is allocated from the acquired specific group information;
generating a specific data area where an area selectable by the user is allocated from the acquired data;
displaying the specific group information area and the specific data area in association with each other on the input/output unit in preference to the first group information and the first data.

### (Supplementary note 21)

The control program according to any one of Supplementary notes 15 to 20, comprising:
displaying the first data area and the first group information area in the same size on the input/output unit.

This application is based upon and claims the benefit of priority from Japanese patent application No. 2010-235284, filed on October 20, 2010, the disclosure of which is incorporated herein in its entirety by reference.

### Industrial Applicability

The present invention is industrially applicable to portable electronic equipment having a telephone directory such as a mobile phone.

### Reference Signs List

- 100: DATA PROCESSING TERMINAL
- 110: STORAGE UNIT
- 111: DATA
- 112: GROUP INFORMATION
- 120: INPUT/OUTPUT UNIT
- 130: CONTROL UNIT
- 200: USER
- 10: MOBILE PHONE TERMINAL
- 11: OPERATION UNIT
- 12: DISPLAY UNIT
- 13: USER INTERFACE UNIT
- 14: TERMINAL DATA PROCESSING UNIT
- 15: TERMINAL DATA STORAGE UNIT
- 151: PERSONAL DATA
- 152: SEPARATOR INFORMATION
- 30: SCREEN
- 30a: SCREEN
- 301: SEPARATOR
- 302: SEPARATOR
- 303: SEPARATOR
- 304: SEPARATOR
- 305: SEPARATOR
- 306: SEPARATOR
- 307: SEPARATOR
- 308: SEPARATOR
- 309: SEPARATOR
- 310: SEPARATOR
- 311: SEPARATOR
- 321: DATA LIST
- 322: DATA LIST
- 328: DATA LIST
- 329: DATA LIST
- 330: DATA LIST
- 331: DATA LIST
- 340: SEPARATOR LIST DISPLAY AREA
- 341: HEADER
- 342: SEPARATOR CANDIDATE SELECTION AREA
- 343: NON-DISPLAY SELECTION AREA
- 344: SEPARATOR SELECTION AREA
- 40: SCREEN
- 401: SEPARATOR
- 402: SEPARATOR
- 403: SEPARATOR
- 404: SEPARATOR
- 421: DATA LIST
- 422: DATA LIST
- 423: DATA LIST
- 424: DATA LIST
- 440: SEPARATOR ATTRIBUTE DISPLAY AREA
- 441: HEADER
- 442: SEPARATOR ATTRIBUTE SELECTION AREA
- 443: NON-DISPLAY SELECTION AREA
- 451: YEAR SELECTION AREA
- 452: MONTH SELECTION AREA
- 453: YEAR SELECTION AREA
- 454: MONTH SELECTION AREA
- 455: YEAR SELECTION AREA
- 456: MONTH SELECTION AREA
- 457: SELECTION CONFIRMATION AREA
- 50: SCREEN
- 501: TAB AREA
- 502: TAB AREA
- 502a: TAB AREA
- 503: TAB AREA
- 504: TAB AREA
- 505: TAB AREA
- 506: TAB AREA
- 511: DATA LIST
- 512: DATA

## Claims

1. A data processing terminal comprising:
a storage means for storing a plurality of data and a plurality of group information being identification information of each group when the plurality of data are classified into a plurality of groups in relevance to each other;
an input/output means for displaying the data and the group information by allocating areas selectable by a user; and
a control means for controlling the storage means and the input/output means, wherein
the control means displays first group information being part of the plurality of group information and first data relevant to the first group information in association with each other as the selectable areas on the input/output means,
upon accepting a selection of the first group information from the user, the control means displays, on the input/output means, a group selection area for selecting any of the plurality of group information including second group information not being displayed on the input/output means,
upon accepting a selection of the second group information from the user through the group selection area, the control means acquires second data relevant to the selected second group information from the storage means, and
the control means displays the second group information and the second data in association with each other as the selectable areas on the input/output means.

2. The data processing terminal according to Claim 1, wherein the control means displays, on the input/output means, the group selection area in preference to the first data having been displayed on the input/output means.

3. The data processing terminal according to Claim 1 or 2,
wherein
upon accepting a selection of the first group information from the user, the control means acquires the second group information from the storage means, and
the control means displays the selectable areas in the second group information, together with the first group information, as the group selection area on the input/output means.

4. The data processing terminal according to Claim 1 or 2,
wherein
upon accepting a selection of the first group information from the user, the control means displays a screen on which an attribute in the plurality of group information can be specified as the group selection area on the input/output means, and
upon accepting a specification of the attribute from the user through the group selection area, the control means acquires group information corresponding to the specified attribute as the second group information from the storage means, and acquires second data relevant to the second group information from the storage means.

5. The data processing terminal according to any one of Claims 1 to 4, wherein
upon accepting a selection of the first group information from the user, the control means ceases to display the selectable area in the first data displayed on the input/output means, and displays the group selection area on the input/output means.

6. The data processing terminal according to any one of Claims 1 to 5, wherein
the storage means further stores, for data satisfying a specified condition among the plurality of data, specific group information being identification information of a specific group to which the data belongs in overlap with the group information classified into groups, and
the specific group information and data relevant to the specific group information are displayed in association with each other as the selectable areas on the input/output means in preference to the first group information and the first data.

7. The data processing terminal according to any one of Claims 1 to 6, wherein
the input/output means displays the selectable areas in the first group information and the first data in the same size.

8. A data search method comprising:
acquiring, from a storage unit that stores a plurality of data and a plurality of group information being identification information of each group when the plurality of data are classified into a plurality of groups in relevance to each other, first group information being part of the plurality of group information and first data relevant to the first group information;
generating a first group information area where an area selectable by a user is allocated from the acquired first group information;
generating a first data area where an area selectable by the user is allocated from the acquired first data;
displaying the first group information area and the first data area in association with each other on an input/output unit that can accept a selection of an area from the user;
upon accepting a selection of the first group information area from the user, displaying, on the input/output unit, a group selection area for selecting any of the plurality of group information including second group information not being displayed on the input/output unit;
upon accepting a selection of the second group information from the user through the group selection area, acquiring the selected second group information and second data relevant to the selected second group information from the storage unit;
generating a second group information area where an area selectable by the user is allocated from the acquired second group information;
generating a second data area where an area selectable by the user is allocated from the acquired second data; and
displaying the second group information area and the second data area in association with each other on the input/output unit.

9. The data search method according to Claim 8, comprising displaying the group selection area on the input/output unit in preference to the first data area having been displayed on the input/output unit.

10. A non-transitory computer readable medium storing a control program causing a computer to execute a process comprising:
acquiring, from a storage unit that stores a plurality of data and a plurality of group information being identification information of each group when the plurality of data are classified into a plurality of groups in relevance to each other, first group information being part of the plurality of group information and first data relevant to the first group information;
generating a first group information area where an area selectable by a user is allocated from the acquired first group information;
generating a first data area where an area selectable by the user is allocated from the acquired first data;
displaying the first group information area and the first data area in association with each other on an input/output unit that can accept a selection of an area from the user;
upon accepting a selection of the first group information area from the user, displaying, on the input/output unit, a group selection area for selecting any of the plurality of group information including second group information not being displayed on the input/output unit;
upon accepting a selection of the second group information from the user through the group selection area, acquiring the selected second group information and second data relevant to the selected second group information from the storage unit;
generating a second group information area where an area selectable by the user is allocated from the acquired second group information;
generating a second data area where an area selectable by the user is allocated from the acquired second data; and
displaying the second group information area and the second data area in association with each other on the input/output unit.
